# EUROPEAN PATENT APPLICATION

(11) **EP 2 782 393 A1**
(43) Date of publication of application: **24.09.2014**
(21) Application number: 12850142.6
(22) Date of filing: 14.11.2012
(51) Int. Cl.: H04W 36/24, H04W 36/38, H04W 84/10

(54) **HOME BASE STATION DEVICE, MOBILE COMMUNICATION SYSTEM, MOBILE TERMINAL DEVICE, AND POSITION MANAGEMENT DEVICE**

(30) Priority: 17.11.2011 JP 2011251282
(71) Applicant: Sharp Kabushiki Kaisha, Osaka-shi, Osaka 545-8522 (JP)
(72) Inventor: ENOMOTO, Masayuki, Osaka-shi, Osaka 545-8522 (JP); ARAMOTO, Masafumi, Osaka-shi, Osaka 545-8522 (JP); HIRAIDE, Junji, Osaka-shi, Osaka 545-8522 (JP)
(74) Representative: Müller-Boré & Partner Patentanwälte PartG mbB
(86) International application number: PCT/JP2012/079474
(87) International publication number: WO 2013/073556

(57) **Abstract**

A mobile communication system and so on are provided in which an LIPA handover procedure utilizing a management table can be started by transmitting a handover request from a home base station device to which a mobile terminal device is connected, and by transmitting a response to the handover request from another home base station device. In the mobile communication system in which, in the case of handover being performed for the mobile terminal device to some other home base station device, one home base station device adaptable for the LIPA handover is determined, as a handover target, from the management table, the management table is updated such that when an address of a gateway device is contained in the handover request, the LIPA handover is enable, and when the address of the gateway device is not contained in the handover request, the LIPA handover is disable.

## Description

### TECHNICAL FIELD

The present invention relates to a mobile communication system and so on in which a local home network is connected to an external network via a gateway device, the local home network being connected to a mobile terminal device and a plurality of home base station devices including a home base station device to which the mobile terminal device is connected.

### BACKGROUND ART

In the mobile communication system standards group, i.e., 3GPP (The 3rd Generation Partnership Project), specification-setting work for EPS (Evolved Packet System) as a mobile communication system for the next generation is progressed as described in Non Patent Literature (NPL) 1 given below.

As one of EPS components, a base station device (eNB) forms a macro cell and covers a range with a radius of several hundreds meters to several kilometers. The base station device accommodates a mobile terminal by employing the radio access technology. Furthermore, the base station device connects the accommodated mobile communication terminal (UE) to a core network that is a network managed by a mobile communication operator, thus relaying communication data of the accommodated mobile communication terminal (UE).

On the other hand, a home base station device (HeNB), i.e., a small-sized base station device installed in a home or an office has been studied as another example of the EPS components. HeNB constructs a radio cell of several tens meters, called a femtocell, and accommodates UE by employing the same radio access technology as employed by ordinary eNB. Furthermore, HeNB connects the accommodated UE to a core network that is a network managed by a mobile communication operator, thus relaying communication data of the accommodated UE. HeNB can also relay the communication data of the accommodated UE by establishing a connection to a core network of a mobile communication system via a broadband line, which is a network installed in a home or an office. In addition, HeNB is able to directly connect to a local network (such as a domestic LAN or an intranet), and to provide a connection (Local IP Access: LIPA) between UE and the local network.

When, during data transmission and reception, a state connected to eNB that is a partner of the data transmission and reception cannot be maintained due to movement of UE, the UE executes switchover to another proper eNB to maintain the connected state and to continue the data transmission and reception. Such an operation is called a handover procedure.

Here, eNB serving as a switchover source (transfer source) in the handover procedure is called Source eNB. Furthermore, eNB serving as a switchover target (transfer target) in the handover processing is called Target eNB.

On the other hand, HeNB has been studied as an alternative means for access to eNB, and specifications of HeNB have been practiced. By installing HeNB in an area that cannot be covered by eNB, it is possible, even in a place not covered by the eNB, for UE to enjoy services comparable to those obtained when the UE accesses eNB. Moreover, when HeNB performs data transmission and reception via a core network, the handover procedure can be executed.

However, when, after accessing HeNB and establishing a local network connection (LIPA connection), UE has moved during the data transmission and reception, it has been impossible to switch over HeNB and to maintain (hand over) the data transmission and reception.

In view of the above-described situation, NPL 2 discusses a handover procedure when, after establishing the LIPA connection from HeNB, HeNB is switched over due to movement of UE while the LIPA connection is maintained.

However, specifications of HeNB have already been practiced, and installation of HeNB not adapted for the LIPA handover procedure has been started. When HeNB adapted for the LIPA handover procedure is practiced through setting of specifications and is started to be used in future, there is a possibility that the HeNB not adapted for the LIPA handover procedure remains in the inadaptable state. Thus, it is estimated that both the HeNB not adapted for the LIPA handover procedure and the HeNB adapted for the LIPA handover procedure are present concurrently. Because the LIPA handover procedure is a novel function for HeNB of current version, the current-version HeNB cannot process a handover request message in LIPA even if it receives the handover request message in LIPA. Moreover, even when the function of the LIPA handover procedure can be added to HeNB by update, for example, there is a possibility that the update is not sufficiently prevailed because HeNB is installed in each home. Accordingly, a situation including both the HeNB adapted for the LIPA handover procedure and the HeNB not adapted for the LIPA handover procedure at the same time occurs inevitably.

The coexistence of the HeNB adapted for the LIPA handover procedure and the HeNB not adapted for the LIPA handover procedure causes the problem that Source HeNB adapted for the LIPA handover procedure transmits a handover request to Target HeNB not adapted for the LIPA handover procedure. In other words, the coexistence of both the types of HeNBs causes unnecessary transmission of the handover request and unnecessary transmission of control information (related to the handover request) in spite of the situation that the LIPA handover procedure cannot be started.

In addition, because Source HeNB does not manage HeNB not adapted for the LIPA handover procedure, Source HeNB transmits the unnecessary handover request again to the HeNB not adapted for the LIPA handover procedure in spite of Source HeNB having once determined that the LIPA connection cannot be started for the relevant HeNB.

To cope with the above-described situation that the handover request is transmitted inefficiently, NPL 2 and NPL 3 propose that Source HeNB holds a neighborhood HeNB relationship table in which the eNB adapted for the LIPA handover procedure and the HeNB not adapted for the LIPA handover procedure are grouped separately, and before starting the handover procedure, Source HeNB refers to the neighborhood HeNB relationship table and selects HeNB to which the handover request is to be transmitted.

Furthermore, NPL 3 states that, when the LIPA handover procedure is started in the case of LIPA connection, Source HeNB serving as the transfer source during the data transmission and reception with respect to UE determines the start of the LIPA handover procedure, and the Source HeNB transmits the handover request, i.e., a trigger for the LIPA handover procedure, to Target HeNB serving as the transfer target. The handover request transmitted at that time is not the handover request of old version, and it contains an information element to execute the LIPA handover procedure in the local home network.

Moreover, NPL 3 states that, when Target HeNB is not adapted for the LIPA handover procedure in the local network, the Target HeNB ignores a new parameter contained in the handover request and transmits a handover request response of old version. In this respect, when the Target HeNB transmits the handover request response of old version regardless of the new parameter contained in the handover request, Source HeNB detects that the Target HeNB is not adapted for the LIPA handover procedure in the local home network.

In addition, according to NPL 3, Source HeNB detects the HeNB that is not adapted for the LIPA handover procedure, and groups, in the neighborhood HeNB relationship table, the detected HeNB as the HeNB not adapted for the LIPA handover procedure.

Here, the neighborhood HeNB relationship table may be set as one component of the system configuration in advance. However, the neighborhood HeNB relationship table is required to be dynamically prepared because there is a possibility that the neighborhood HeNB relationship table is frequently changed in anticipation of the fact that HeNB can be installed by a user at a certain degree of freedom and the arrangement of HeNB is frequently changed in the configuration of the local home network.

### CITATION LIST

### [Non-Patent Document]

NPL 1: 3GPP TS23.401 ver.10.2.1 3rd Generation Partnership Project; Technical Specification Group Services and System Aspects; General Packet Radio Service (GPRS) enhancements for Evolved Universal Terrestrial Radio Access Network (E-UTRAN) access (Release 10)
NPL 2: 3GPP TR23.859 ver.0.4.0 3rd Generation Partnership Project; Technical Specification Group Services and System Aspects; LIPA Mobility and SIPTO at the Local Network (Release 11)
NPL 3: "Discovery of the LIPA mobility area", 3GPPTSGSAWG2 #85, R1-112828

### DISCLOSURE OF THE INVENTION

### Problems to be Solved by the Invention

With the ordinary method of detecting Target HeNB by Source HeNB, however, Target HeNB cannot be correctly detected in some cases. For example, when Source HeNB transmits the handover request to Target HeNB and the Target HeNB transmits a handover failure notice as a response indicating that the Target HeNB cannot start the LIPA handover procedure, the Source HeNB detects the Target HeNB as being not adapted for the LIPA handover procedure even if the Target HeNB is adapted for the LIPA handover procedure.

More specifically, the handover failure notice may be transmitted in not only the case where Target HeNB is HeNB inherently not adapted for the LIPA handover procedure, but also the case where, even when Target HeNB is HeNB inherently adapted for the LIPA handover procedure, Target HeNB is in a state not adapted for the LIPA handover procedure at timing of the transmission of the handover request. Thus, Source HeNB may erroneously detect Target HeNB.

As described above, there has been the problem that Source HeNB cannot correctly detect Target HeNB.

Because the fact that Target HeNB is not adapted for the LIPAhandover procedure cannot be correctly detected due to the above-described problem, it has been difficult to correctly group, in the neighborhood HeNB relationship table, Target HeNB as the HeNB adapted for the LIPA handover procedure.

Furthermore, a method of transmitting the handover request response, indicating that Target HeNB is adapted for the LIPA handover procedure, is not yet stipulated, and it has been difficult to correctly detect the fact that Target HeNB is adapted for the LIPA handover procedure.

Thus, because the fact that Target HeNB is adapted for the LIPA handover procedure cannot be correctly detected, Target HeNB cannot be grouped, in the neighborhood HeNB relationship table, as the HeNB adapted for the LIPA handover procedure.

Moreover, because the HeNB adapted for the LIPA handover procedure and the HeNB not adapted for the LIPA handover procedure cannot be correctly grouped in the neighborhood HeNB relationship table, the efficient LIPA handover procedure utilizing the neighborhood HeNB relationship table cannot be started.

To solve the above-described problems, an object of the present invention is to provide a mobile communication system and so on in which an LIPA handover procedure utilizing a management table can be started by transmitting a handover request from Source HeNB (i.e., a home base station device to which a mobile terminal device is connected), and by transmitting a response to the handover request from Target HeNB (i.e., another home base station device).

### Means for Solving the Problems

In view of the above-described problems, the present invention provides a home base station device included in a mobile communication system in which a local home network is connected to an external network via a gateway device, the local home network being connected to a mobile terminal device and a plurality of home base station devices including a home base station device to which the mobile terminal device is connected, the home base station device includes: a management table configured to manage whether other home base station devices are adaptable for LIPA handover; determination means configured to, in a case of handover being performed for the mobile terminal device to some other home base station device, determine one home base station device adaptable for the LIPA handover, as a handover target, from the management table; handover request transmission means configured to transmit a handover request, which contains at least an address of a connected gateway device in an option area thereof, to the other one home base station device; handover reception means configured to receive a handover request response from the one other home base station device; and update means configured to update the management table such that when the address of the gateway device is contained in the handover request, the LIPA handover is enable, and when the address of the gateway device is not contained in the handover request, the LIPA handover is disable.

In the home base station device according to the present invention, in a case of the handover request containing the address of the gateway device, when the address of the gateway device to which is connected the home base station connected to the mobile terminal device is different from the address of the gateway device, which is contained in the handover request, the update means updates the management table such that the LIPA handover is disable.

The present invention provides a home base station device included in a mobile communication system in which a local home network is connected to an external network via a gateway device, the local home network being connected to a mobile terminal device and a plurality of home base station devices including a home base station device to which the mobile terminal device is connected, the home base station device includes: handover request reception means configured to receive a handover request from the home base station device connected to the mobile terminal device; and handover request response transmission means configured to, when an address of the gateway device is contained in an option area of the handover request and LIPA handover is acceptable, transmit a handover request response containing an address of a connected gateway device.

The present invention provides a mobile communication system in which a local home network is connected to an external network via a gateway device, the local home network being connected to a mobile terminal device and a plurality of home base station devices including a home base station device to which the mobile terminal device is connected, the home base station device includes: a management table configured to manage whether other home base station devices are adaptable for LIPA handover; determination means configured to, in a case of handover being performed for the mobile terminal device to some other home base station device, determine one home base station device adaptable for the LIPA handover, as a handover target, from the management table; handover request transmission means configured to transmit a handover request, which contains at least an address of a connected gateway device in an option area thereof, to the other one home base station device; handover reception means configured to receive a handover request response from the other one home base station device; and update means configured to update the management table such that when the address of the gateway device is contained in the handover request, the LIPA handover is enable, and when the address of the gateway device is not contained in the handover request, the LIPA handover is disable.

Furthermore, the present invention provides a mobile terminal device connected to the above-described mobile communication system.

Moreover, the present invention provides a position management device connected to a mobile communication system in which a local home network is connected to an external network via a gateway device, the local home network being connected to a mobile terminal device and a plurality of home base station devices including a home base station device to which the mobile terminal device is connected, the home base station device includes: handover request reception means configured to receive a handover request from the home base station device connected to the mobile terminal device; confirmation means configured to, when an address of the gateway device is contained in an option area of the handover request, confirm whether the home base station device contained in the handover request is able to accept LIPA handover; and handover request response transmission means configured to, when the home base station device contained in the handover request is able to accept the LIPA handover, transmit a handover request response containing an address of a gateway device to which the relevant home base station device is connected.

### Effects of the Invention

According to the present invention, by transmitting the handover request that contains information elements indicating the relevant handover procedure being the LIPA handover procedure, Source HeNB can detect whether Target HeNB is adapted for the LIPA handover procedure, can form a neighborhood HeNB relationship table. Thus, Source HeNB can suppress transmission of the unnecessary handover request by utilizing the neighborhood HeNB relationship table, and can efficiently start the LIPA handover procedure.

In other words, by transmitting the handover request that contains, in its option area, new information elements indicating the relevant handover procedure being the LIPA handover procedure, Source HeNB can detect whether Target HeNB is adapted for the LIPA handover procedure.

Furthermore, by receiving the handover request from Source HeNB and transmitting an ordinary handover request response, Target HeNB can notify that the relevant Target HeNB is not adapted for the LIPA handover procedure.

Moreover, by receiving the ordinary handover request response from Target HeNB, Source HeNB can detect that the relevant Target HeNB is the HeNB not adapted for the LIPA handover procedure.

In addition, by detecting that Target HeNB is the HeNB not adapted for the LIPA handover procedure, Source HeNB can group the relevant Target HeNB, as the HeNB not adapted for the LIPA handover procedure, in the neighborhood HeNB relationship table.

By receiving the handover request from Source HeNB and transmitting the handover request response in the LIPA handover procedure, Target HeNB can indicate that the relevant Target HeNB is adapted for the LIPA handover procedure.

By receiving the handover request response in the LIPA handover procedure from Target HeNB, Source HeNB can detect that the relevant Target HeNB is the HeNB adapted for the LIPA handover procedure.

By detecting that Target HeNB is the HeNB adapted for the LIPA handover procedure, Source HeNB can group the relevant Target HeNB, as the HeNB adapted for the LIPA handover procedure, in the neighborhood HeNB relationship table.

By utilizing the neighborhood HeNB relationship table in which the HeNB not adapted for the LIPA handover procedure and the HeNB adapted for the LIPA handover procedure are grouped separately, Source HeNB can suppress transmission of the handover request to the HeNB not adapted for the LIPA handover procedure, and hence can efficiently start the LIPA handover procedure.

### BRIEF DESCRIPTION OF THE DRAWINGS

[Fig. 1] Fig. 1 illustrates an entire mobile communication system according to a first embodiment.
[Fig. 2] Fig. 2 is a block diagram to explain a functional configuration of HeNB (Source HeNB) in the first embodiment.
[Fig. 3] Fig. 3 illustrates one example of data configuration of a per-UE Target HeNB table in the first embodiment.
[Fig. 4] Fig. 4 illustrates one example of data configuration of a neighborhood HeNB relationship table in the first embodiment.
[Fig. 5] Fig. 5 illustrates one example of data configuration of a handover candidate table in the first embodiment.
[Fig. 6] Fig. 6 illustrates one example of a format of a handover request message.
[Fig. 7] Fig. 7 is a block diagram to explain a functional configuration of HeNB (first Target HeNB) in the first embodiment.
[Fig. 8] Fig. 8 is a block diagram to explain a functional configuration of HeNB (second Target HeNB) in the first embodiment.
[Fig. 9] Fig. 9 illustrates one example of a format of an LIPA handover request response message.
[Fig. 10] Fig. 10 is a block diagram to explain a functional configuration of UE in the first embodiment.
[Fig. 11] Fig. 11 is a block diagram to explain a functional configuration of LGW in the first embodiment.
[Fig. 12] Fig. 12 illustrates one example of data configuration of binding information in the first embodiment.
[Fig. 13] Fig. 13 is a block diagram to explain a functional configuration of SGW in the first embodiment.
[Fig. 14] Fig. 14 is a block diagram to explain a functional configuration of MME in the first embodiment.
[Fig. 15] Fig. 15 illustrates one example of data configuration of a subscription DB in the first embodiment.
[Fig. 16] Fig. 16 illustrates one example of data configuration of an APN-IP address conversion DB in the first embodiment.
[Fig. 17] Fig. 17 illustrates one example of data configuration of an EPS bearer context in the first embodiment.
[Fig. 18] Fig. 18 is a chart to explain processing in the first embodiment.
[Fig. 19] Fig. 19 is a chart to explain processing in the first embodiment.
[Fig. 20] Fig. 20 is a chart to explain processing in a second embodiment.

### BEST MODE FOR CARRYING OUT THE INVENTION

### [1. First Embodiment]

### [1.1 Explanation of Entire System]

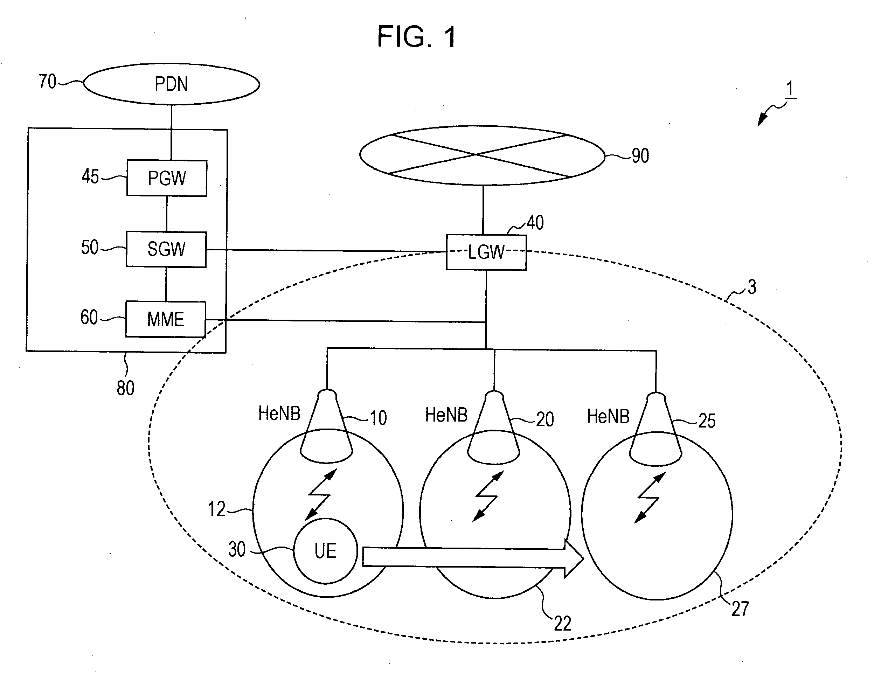

Fig. 1 illustrates a mobile communication system 1 according to a first embodiment of the present invention. The mobile communication system 1 includes a home base station device (HeNB) 10, a home base station device (HeNB) 20, a home base station device (HeNB) 25, a mobile terminal device (UE) 30, an LGW 40, a PDN 70, a core network 80, and a home network 90. The core network 80 includes a PGW 45, an SGW 50, and an MME 60. In the following description, the home base station device is called simply "HeNB", and the mobile terminal device UE is called simply "UE". The mobile terminal device is described below as being UE. Furthermore, a communication device for transmitting and receiving data with respect to the UE 30 is disposed in the home network 90.

In this embodiment, it is assumed that, in a state of the UE 30 performing data transmission and reception via the HeNB 10 and the LGW 40 with respect to a communication device in the home network 90, the UE 30 is moved from the HeNB 10. Here, the data transmission and reception performed between the UE 30 and the communication device in the home network 90 is called LIPA (Local IP Access or domestic network access)

When the data transmission and reception is performed between the UE 30 and the communication device in the home network 90 through the LIPA, the UE 30 has to establish an LIPA-adapted PDN connection to the LGW 40. The term "LIPA-adapted PDN connection" implies a logical path from the UE 30 to the LGW 40. Furthermore, when the UE 30 performs the data transmission and reception via the LGW 40 with respect to the communication device in the home network, the UE 30 is required to set an LIPA bearer with respect to the LGW 40 after establishing the LIPA-adapted PDN connection to the LGW 40. The term "LIPA bearer" implies communication resource used to perform the data transmission and reception between the UE 30 and the LGW 40.

While Fig. 1 illustrates one UE for convenience of explanation, a plurality of UEs may be included. The HeNB 10 forms a femtocell 12.

The term "femtocell" implies an area where HeNB and UE can establish a radio connection. When the UE 30 is moved from the area of the femtocell of the HeNB 10 to a femtocell of the HeNB 20, the connection has to be switched over from the HeNB 10 to the HeNB 20.

An LIPA handover procedure can be utilized between the HeNB 10 and the HeNB 25. When the UE 30 is moved to the HeNB 20 during the data transmission and reception of the UE 30 via the HeNB 10, the data transmission and reception cannot be continued in the HeNB 20 even with execution of the LIPA handover procedure. Here, the HeNB 20 is HeNB not adapted for the LIPA handover procedure, and the HeNB 20 cannot start the LIPA handover procedure. Therefore, the data transmission and reception with respect to the communication device in the home network cannot be continued via the HeNB 20.

On the other hand, when the UE 30 is moved to the HeNB 25 in the state of the UE 30 performing the data transmission and reception in the HeNB 10, the communication can be continued in the HeNB 25 by executing the LIPA handover procedure.

Because the HeNB 25 is HeNB adapted for the LIPA handover procedure, the HeNB 25 can start the LIPA handover procedure and can continue the data transmission and reception with respect to the communication device in the home network via the HeNB 25.

Here, the term "LIPA handover procedure" implies a procedure for enabling, when HeNB connected to the LGW 40 is performing data transmission and reception, the communication to be continued in HeNB connected to the LGW 40. On the other hand, the ordinary handover procedure enables data transmission and reception to be continued when HeNB is connected to the PGW 45. The PGW 45 is a terminal end of the core network to which eNB, etc. are connected, and it provides a connection to the PDN 70 (Packet Data Network). The PDN 70 implies a packet communication network, e.g., the Internet.

Hitherto, the PGW 45 has been a terminal point in the core network, whereas the LGW 40 has been a terminal point in the home network 90 instead of being a terminal point in the core network. Furthermore, the UE 30 has been required to establish the PDN connection and to set a bearer for accessing the core network 80, whereas it has been required to establish the LIPA-adapted PDN connection and to set an LIPA bearer for accessing the home network 90. Stated in another way, the PGW 45 cannot access the home network 90, cannot establish the LIPA-adapted PDN connection, and cannot set the LIPA bearer. However, the LGW 40 can access the home network 90, can establish the LIPA-adapted PDN connection, and can set the LIPA bearer. Thus, the LGW 40 can execute the LIPA handover procedure.

The handover procedure can be utilized in the HeNB 10, the HeNB 20, and the HeNB 25. In this embodiment, however, it is assumed that the LIPA handover procedure is set to be utilizable in the HeNB 10 and the HeNB 25.

The PGW 45 is connected to the SGW 50 and the PDN 70, and it functions as a gateway for connecting the core network 80 and the PDN 70. The PGW 45 receives data, which is transmitted from the PDN 70 to the UE 30, from the PDN and transfers the received data to the SGW 50. Furthermore, the PGW 45 receives data, which is transmitted from the UE 30 to the PDN 70, from the SGW 50 and transfers the received data to the PDN 70. The PGW 45 establishes the PDN connection to provide a connection between the UE 30 and the PDN 70.

The SGW 50 is a service control device, which is connected to the LGW 70, the HeNB 10, the HeNB 20, and the HeNB 25, and which executes packet transfer between the SGW 50 and the HeNB 20.

The MME 60 serves not only as a device that executes signaling, but also as a position management device that executes position management of the UE 30 and a procedure for establishing the EPS bearer. The term "EPS bearer" implies a logical path for transferring a user IP packet, the logical path being established per UE between HeNB (i.e., the HeNB 10, the HeNB 20, or the HeNB 25) and the LGW 40 to transfer an IP packet. It is to be noted that the UE 30 can establish a plurality of EPS bearers.

A Local Home Network (LHN) 3 includes the LGW 40, the HeNB 10, the HeNB 20, the HeNB 25, and the UE 30. The LHN 3 is connected to the home network 90 via the LGW 40. Here, the term "Local Home Network" implies, e.g., a domestic network or an intranet, and it is connected to the home network 90 through an optical fiber or an ADSL.

The LGW 40 functions as a home gateway in the LHN 3 to transfer a packet when establishing the connection to the HeNB 10, the HeNB 20, or the HeNB 25, which is connected to the LGW 40. Furthermore, when the UE 30 is going to be connected the home network, the LGW 40 establishes an LIPA-adapted PDN connection. The term "LIPA-adapted PDN connection" implies a logical path connecting the LGW 40 and the UE 30.

The HeNB 10 forms the femtocell 12 and functions as a base station device in 3GPP LTE capable of accommodating the UE 30. The HeNB 20 forms a femtocell 22 and functions as a base station device in 3GPP LTE capable of accommodating the UE 30. The HeNB 25 forms a femtocell 27 and functions as a base station device in 3GPP LTE capable of accommodating the UE 30.

The UE 30 is a communication device including the communication interface for 3GPP LTE, and it is connected to the HeNB 10.

### [1.2 Device Configuration]

Principal configurations of components included in the mobile communication system 1 according to the embodiment of the present invention, i.e., the HeNB 10, the HeNB 20, the HeNB 25, the UE 30, the LGW 40, the SGW 50, and the MME 60, will be described below. Sequence charts representing sequences in the first embodiment will be described finally.

### [1.2.1 Configuration of HeNB 10]

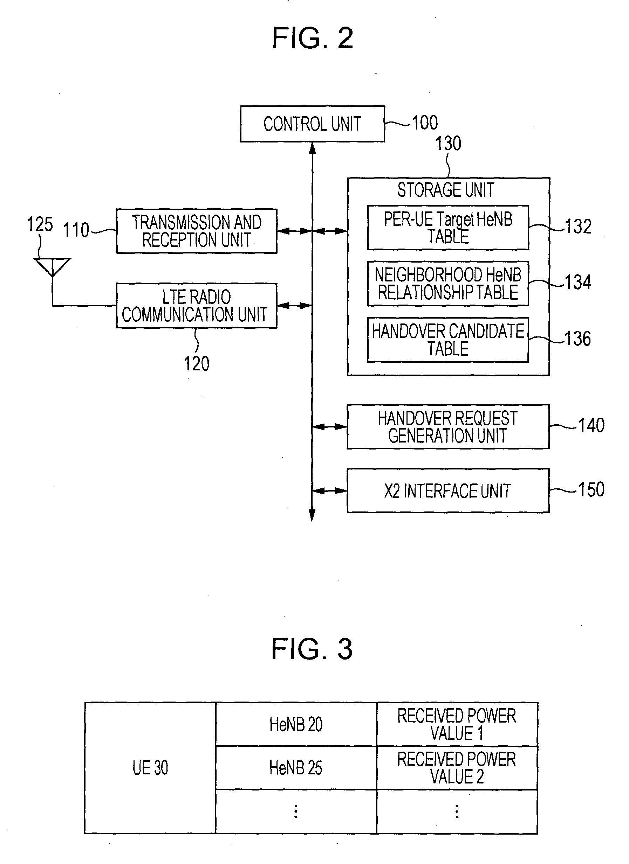

Fig. 2 is a functional block diagram to explain a configuration of the HeNB 10 (i.e., Source HeNB). The HeNB 10 includes a control unit 100, a transmission and reception unit 110, an LTE radio communication unit 120, a storage unit 130, a handover request generation unit 140, a path-switch request signal generation unit 150, and an antenna 125.

The control unit 100 reads out and executes various programs stored in the storage unit 130, thereby realizing various processes in the HeNB 10. Those processes are executed by a device, e.g., a CPU (not illustrated), incorporated in the control unit 100.

The transmission and reception unit 110 is a functional unit used to receive downlink data destined for the UE 30, the data being received from the LGW 40. Furthermore, the transmission and reception unit 110 receives uplink data from the UE 30 via the LTE radio communication unit 120, and then transfers the received data to the LGW 40.

The LTE radio communication unit 120 is a functional unit to perform radio communication with the UE 30 and to accommodate the UE 30. The external antenna 125 is connected to the LTE radio communication unit 120.

The storage unit 130 is a functional unit that stores various programs necessary for operations of Source HeNB 10, and various data. The storage unit 130 is constituted by, e.g., a semiconductor memory or a HDD (Hard Disk Drive).

Furthermore, the storage unit 130 stores a per-UE Target HeNB table 132, a neighborhood HeNB relationship table 134, and a handover candidate table 136.

The per-UE Target HeNB table 132 is a table used to manage a list of HeNBs that have been extracted by utilizing a measurement report transmitted from the UE 30. Fig. 3 illustrates one example of the per-UE Target HeNB table 132. In the table of Fig. 3, HeNBs are included in a descending order of power values received by the UE 30 (e.g., received power value 1 > received power value 2), which are each calculated based on a reference signal transmitted per HeNB (for each of the HeNB 20 and the HeNB 25 in this embodiment) by employing the measurement report received by Source HeNB. Here, the term "measurement report" implies a report from the UE 30, the report including, e.g., the received power value calculated using the reference signal from each HeNB adjacent to the UE 30.

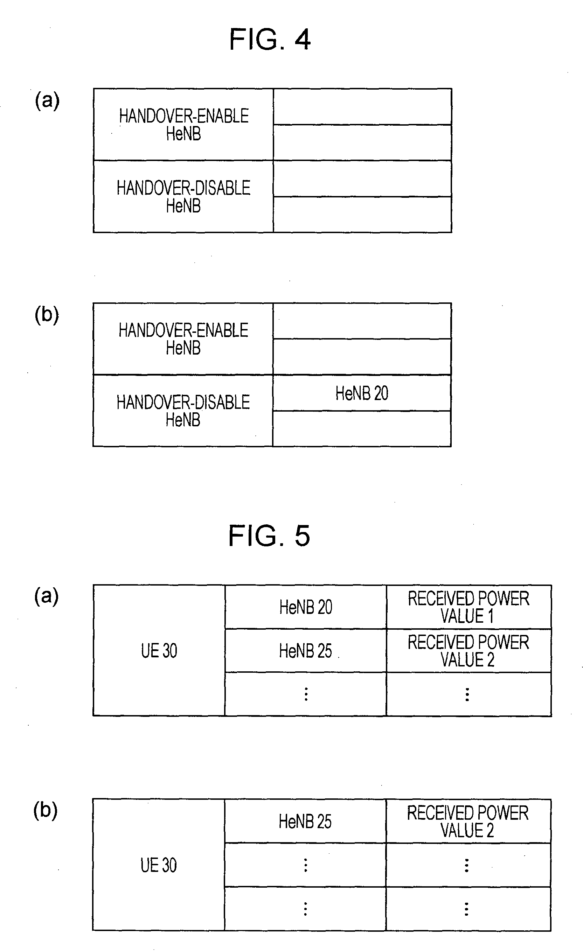

The neighborhood HeNB relationship table 134 is a table used to determine whether the Target HeNB is an LIPA handover-enable HeNB, and to execute management by utilizing a handover request response transmitted from Target HeNB. Fig. 4 illustrates one example of the neighborhood HeNB relationship table 134.

As illustrated in Fig. 4, the neighborhood HeNB relationship table 134 manages a list of handover-enable HeNBs, and a list of handover-disable HeNBs. Transmission of the LIPA handover request to the LIPA handover-disable HeNB can be limited, for example, by utilizing the neighborhood HeNB relationship table 134 illustrated in Fig. 4, specifically by utilizing the list of LIPA handover-disable HeNBs. Accordingly, the LIPA handover-enable HeNB can be efficiently determined.

Alternatively, the neighborhood HeNB relationship table 134 may limit HeNBs to which the LIPA handover request is transmitted, by managing only a list of HeNBs not adapted for the LIPA handover procedure (i.e., the list of handover-disable HeNBs).

The handover candidate table 136 is a table used to manage a candidate of HeNB to which the UE 30 is handed over. Fig. 5 illustrates one example of the handover candidate table 136.

The handover candidate table 136 is a table generated by utilizing the per-UE Target HeNB table 132 and the neighborhood HeNB relationship table 136. More specifically, the handover candidate table 136 manages the candidate of the LIPA handover-enable HeNB by excluding, from the per-UE Target HeNB table 132, the HeNB(s) in the handover-disable HeNB list that is included in the neighborhood HeNB relationship table 136.

Fig. 5(a) illustrates the handover candidate table 136 that is generated from both the per-UE Target HeNB table 132 generated from the measurement report and the neighborhood HeNB relationship table 134 illustrated in Fig. 4(a). Because the handover-disable HeNB list in the neighborhood HeNB relationship table 134 is blank, any HeNB is not deleted from the Target HeNB list obtained from the measurement report.

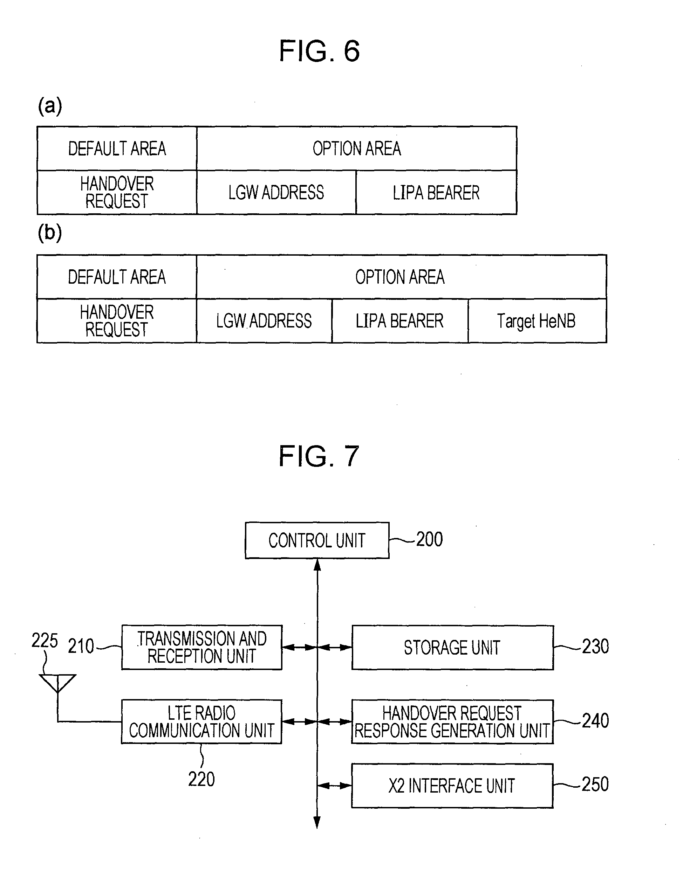

Fig. 5(b) illustrates the handover candidate table 136 that is generated from both the per-UE Target HeNB table 132 generated from the measurement report and the neighborhood HeNB relationship table 134 illustrated in Fig. 4(b). More specifically, the handover candidate table 136 is generated by deleting HeNB(s) (here, the HeNB 25) in the handover-disable HeNB list. The handover request generation unit 140 determines execution of the handover and generates a handover request message that is transmitted to Target HeNB. Fig. 6(a) illustrates a format of the handover request message.

It is to be noted that the handover candidate table 136 may not be prepared when the following function can be realized, i.e., when Source HeNB has the function of selecting Target HeNB (e.g., HeNB having a maximum received power value) from the per-UE Target HeNB table 132, checking the neighborhood HeNB relationship table 132, and, if the selected Target HeNB is not adapted for the LIPA handover procedure, selecting another Target HeNB again from the per-UE Target HeNB table 132.

The handover request message illustrated in Fig. 6(a) contains, in a default area, information of the ordinary handover request, and in an option area, information of the LGW address of LGW to which Source HeNB is connected, and of the LIPA bearer which has been employed by Source HeNB. Here, the term "LIPA bearer" implies communication resource from the LGW 40 to the UE 30 via the HeNB 10. By notifying the above-mentioned LIPA bearer in the procedure of LIPA handover to the HeNB 25, for example, the communication resource from the LGW 40 to the UE 30 via the HeNB 25 can be set while the LIPA-adapted PDN connection is maintained. The LIPA-adapted PDN connection may be contained in the option area of the handover request message. Here, the LIPA-adapted PDN connection implies a logical path from the UE 30 to the LGW 40. The LIPA bearer implies communication resource that is set after the UE 30 has established the LIPA-adapted PDN connection, and that is used to perform data transmission and reception with respect to a communication device in the home network 90.

The X2 interface unit 150 performs transmission and reception with respect to Source HeNB. The X2 interface unit 150 is able to transfer data and control information with respect to HeNB.

### [1.2.2 Configuration of HeNB 20]

The HeNB 20 (i.e., first Target HeNB) will be described below. Fig. 7 is a functional block diagram to explain a configuration of the HeNB 20.

The HeNB 20 includes a control unit 200, a transmission and reception unit 210, an LTE radio communication unit 220, an antenna 225, a storage unit 230, a handover request response generation unit 240, and an X2 interface 260.

The control unit 200 reads out and executes various programs stored in the storage unit 230, thereby realizing various processes in the HeNB 20.

The transmission and reception unit 210 is a functional unit used to receive downlink data destined for the UE 30, the data being received from the LGW 40. Furthermore, the transmission and reception unit 210 receives uplink data from the UE 30 via the LTE radio communication unit 220, and then transfers the received data to the LGW 40. In addition, the transmission and reception unit 210 can receive a path switch response from the LGW 40.

The LTE radio communication unit 220 functions as a base station in a cellular phone system LTE and performs transmission and reception with respect to the UE 30. The external antenna 225 is connected to the LTE radio communication unit 220.

The storage unit 230 is a functional unit that stores various programs necessary for operations of the HeNB 20, and various data. The storage unit 230 is constituted by, e.g., a semiconductor memory or a HDD (Hard Disk Drive).

The handover request response generation unit 240 receives the LIPA handover request and generates a handover request response. Here, the handover request response generation unit 240 does not process the LIPA bearer and the LGW address (i.e., the LIPA-adapted PDN connection), which are included in the LIPA handover request, and transmits the handover request response. The HeNB 10 (Source HeNB) receives the handover request response and determines that the HeNB 20 (first Target HeNB) is not adapted for the LIPA handover procedure.

The X2 interface unit 250 performs transmission and reception with respect to Source HeNB. The X2 interface unit 250 is able to transfer data and control information with respect to HeNB.

### [1.2.3 Configuration of HeNB 25]

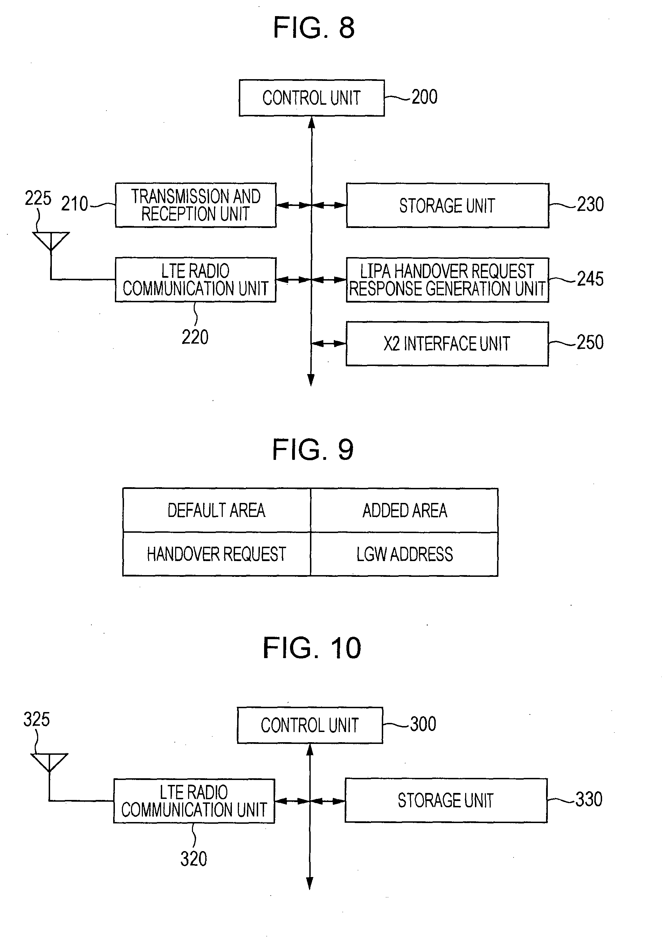

A configuration of the HeNB 25 (i.e., second Target HeNB) will be described below with reference to Fig. 8. The HeNB 25 is different from the HeNB 20, described above with reference to Fig. 7, in including an LIPA handover request response generation unit 245 instead of the handover request response generation unit 240. The same functional units as those in the HeNB 20 are denoted by the same reference signs, and description of those functional units is omitted.

The LIPA handover request response generation unit 245 is a functional unit that receives the LIPA handover request and that generates an LIPA handover request response when the LIPA handover is enabled. Fig. 9 illustrates an LIPA handover request response message. In Fig. 9, the address of the LGW 40 to which the HeNB 20 is connected is included as an added area in addition to the handover request response message in the default area.

Upon receiving the LIPA handover request response indicating the LGW address, illustrated in Fig. 6, to which the HeNB 20 is connected, the HeNB 10 (Source HeNB) determines that the HeNB 25 (second Target HeNB) is the LIPA handover-enable HeNB.

### [1.2.4 Configuration of UE 30]

A configuration of the UE 30 will be described below with reference to Fig. 10. The UE 30 includes a control unit 300, an LTE radio communication unit 310, and a storage unit 330.

The control unit 300 is a functional unit that controls the entirety of the UE 30. The control unit 300 reads out and executes various programs stored in the storage unit 330, thereby realizing various processes. The control unit 300 is constituted by a CPU (Central Process Unit), for example.

The LTE radio communication unit 320 is a functional unit enabling UE to perform LTE communication with each HeNB. An external antenna 325 is connected to the LTE radio communication unit 320.

The storage unit 330 is a functional unit that stores various programs necessary for operations of the UE 30, and various data. The storage unit 330 is constituted by, e.g., a semiconductor memory or a HDD (Hard Disk Drive).

Here, practical examples of the UE 30 include not only a mobile terminal device that is connected to each HeNB via a radio access interface, but also a PDA (Personal Digital Assistant), a smartphone, and other terminals.

### [1.2.5 Configuration of LGW 40]

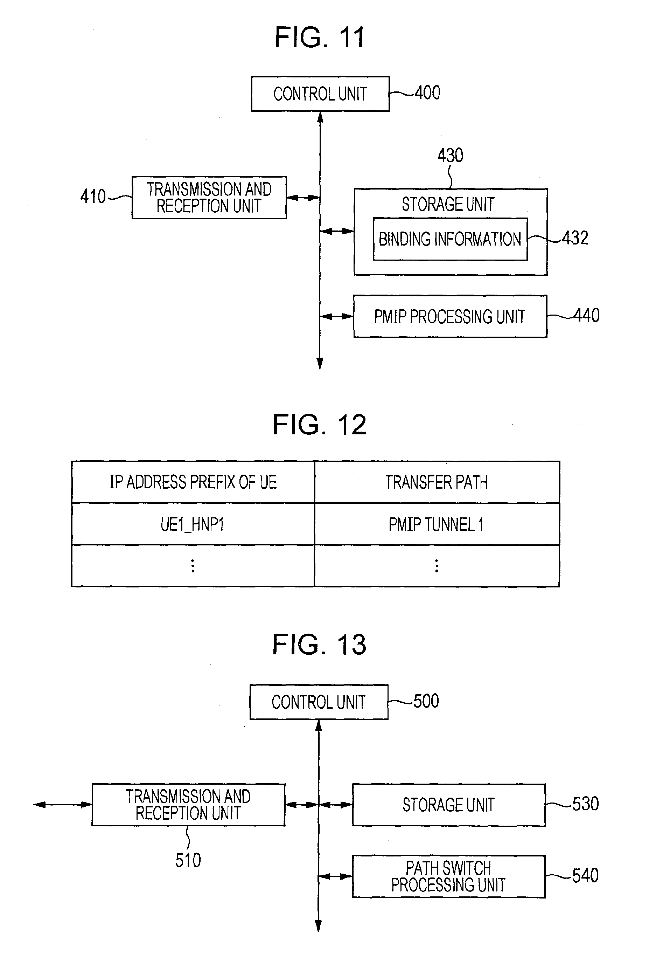

A configuration of the LGW 40 will be described below with reference to Fig. 11. Fig. 11 is a block diagram to explain the functional configuration of the LGW 40. The LGW 40 includes a control unit 400, a transmission and reception unit 410, a storage unit 430, and a PMIP processing unit 440.

The control unit 400 is a functional unit that controls the entirety of the LGW 40. The control unit 400 reads out and executes various programs stored in the storage unit 430, thereby realizing various processes. The control unit 400 is constituted by a CPU (Central Process Unit), for example.

The transmission and reception unit 410 is wire-connected to a router or a switch, and it performs packet transmission and reception with respect to the home access network 90, the HeNB 10, or the HeNB 20. For example, commonly utilized Ethernet (registered trademark) is used for connection to the home access network 90 to perform the packet transmission and reception. The storage unit 430 is a functional unit that stores various programs necessary for operations of the LGW 40, and various data. The storage unit 430 is constituted by, e.g., a semiconductor memory. The storage unit 430 stores the binding information 432.

The binding information 432 is used, when the LGW 40 receives communication data divided in packets and destined for the UE 30, to determine a transfer path through which the communication data is to be transferred to the UE 30. Fig. 12 illustrates one example of the binding information.

As illustrated in Fig. 12, the binding information 432 manages an IP address prefix (hereinafter referred to as a "HNP (Home Network Prefix)") and a transfer path (e.g., "PMIP tunnel 1") to the LGW 40 in binding relation.

Here, the IP address prefix "UE1_HNP1" of the UE 30 and the transfer path "PMIP tunnel 1" represent an entry for a certain UE (e.g., the UE 30).

It is assumed that a unique (uniquely identified) HNP is assigned to each UE. The HNP is used to generate a UE address in accordance with the IPv6 (IP version 6). The HNP assigned here is not necessarily required to be IPv6, and it may be IPv4 (IP version 4).

The PMIP processing unit 440 is a functional unit that establishes a transfer path (called a PMIP tunnel) used between the LGW 40 and the HeNB 10, the HeNB 20 or the HeNB 25.

### [1.2.6 Configuration of SGW 50]

A functional configuration of the SGW 50 will be described below with reference to Fig. 13. Fig. 13 is a functional block diagram to explain the configuration of the SGW 50.

The SGW 50 includes a control unit 500, a transmission and reception unit 510, a storage unit 530, and a path switch processing unit 540.

The control unit 500 is a functional unit that controls the entirety of the SGW 50. The control unit 500 reads out and executes various programs stored in the storage unit 530, thereby realizing various processes. The control unit 500 is constituted by a CPU (Central Process Unit), for example.

The transmission and reception unit 510 is wire-connected to a router or a switch, and it performs packet transmission and reception with respect to the LGW 40 and the MME 60. The packet transmission and reception is performed using, e.g., Ethernet (registered trademark) that is commonly utilized for network connection.

The storage unit 530 is a functional unit that stores various programs necessary for operations of the SGW 50, and various data. The storage unit 530 is constituted by, e.g., a semiconductor memory.

The path switch processing unit 560 executes, in response to a path switch request received by the transmission and reception unit 510, path switch processing to change the data transmission target to the HeNB 20 or the HeNB 25, which is included in the path switch request. The transmission unit 510 transmits a path switch request response to the MME 60.

### [1.2.7 Configuration of MME 60]

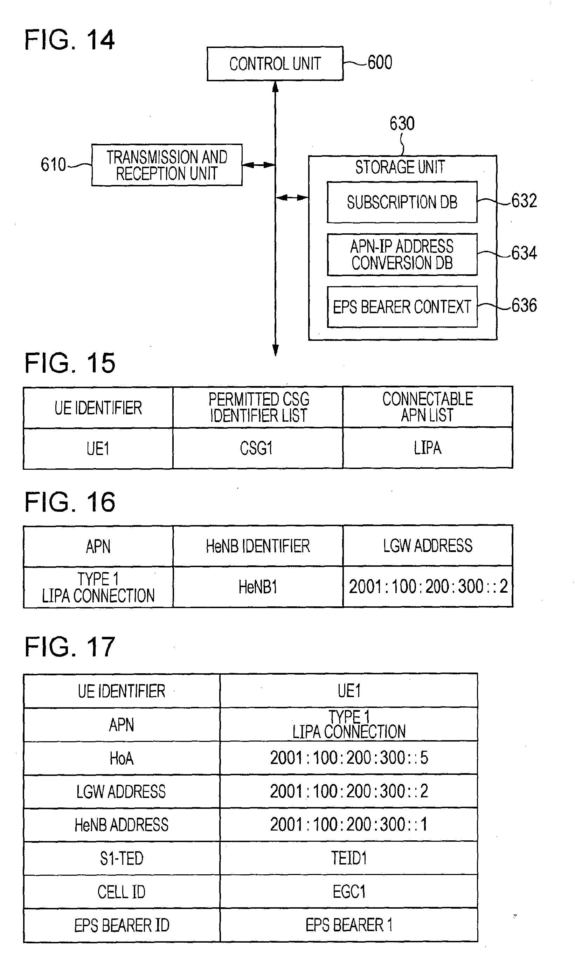

A functional configuration of the MME 60 will be described below with reference to Fig. 14. Fig. 14 is a block diagram to explain the functional configuration of the MME 60. The MME 60 includes a control unit 600, a transmission and reception unit 610, and a storage unit 630.

The control unit 600 is a functional unit that controls the entirety of the MME 60. The control unit 600 reads out and executes various programs stored in the storage unit 630, thereby realizing various processes. The control unit 600 is constituted by a CPU (Central Process Unit), for example.

The transmission and reception unit 610 is a functional unit that is wire-connected to a router or a switch, and that performs packet transmission and reception. The transmission and reception unit 610 performed the packet transmission and reception with respect to the HeNB 10, the HeNB 20, or the HeNB 25 using, e.g., Ethernet (registered trademark) that is commonly utilized for network connection.

The storage unit 630 is a functional unit that stores various programs necessary for operations of the MME 60, and various data. The storage unit 630 is constituted by, e.g., a semiconductor memory or a HDD (Hard Disk Drive). The storage unit 630 stores a subscription DB 632, an APN-IP address conversion DB 634, and an EPS bearer context 636.

As illustrated in Fig. 15, the subscription DB 632 is a DB for managing, in relation to the UE 30 managed by the mobile communication system 1, a UE identifier (e.g., "UE1" generated in accordance with IMSI (International Mobile Subscriber Identify), a permitted CSG identifier list (e.g., "CSG 1"), and a connectable APN list (e.g., "LIPA") in binding relation.

Here, the term "CSG (Closed Subscriber Group) identifier" implies a group identifier assigned to the HeNB 20. Permission of access to the HeNB 20 from the UE 30 is determined in accordance with the permitted CSG identifier list in the subscription DB 632. From the viewpoint of efficiency in management, management of access authority may be concentrated by assigning the same CSG identifier to a plurality of HeNBs. The term "APN" implies an identifier for identifying service in EPS.

The permission of access to the HeNB 10 from UE is determined depending on whether the HeNB 10 currently under connection is included in the permitted CSG identifier list, and on whether APN (e.g., LIPA) used to access the local home network is included in the connectable APN list.

The APN-IP address conversion DB 634 is a DB for solving an IP address of LGW by employing APN and a HeNB identifier. As illustrated in Fig. 16, the APN-IP address conversion DB 634 manages APN (e.g., "Type 1 / LIPA connection"), the HeNB identifier (e.g., "HeNB 1"), and the LGW address (e.g., "2001:100:200:300::2) in binding relation.

When HeNB to which the UE 30 is connected is switched over (e.g., when the connected HeNB is switched over from the HeNB 10 as the switchover source to the HeNB 20 as the switchover target), the MME 60 refers to the APN-IP address conversion DB 634 by employing the HeNB identifier and the APN for local IP access, which are currently assigned, and obtains an LGW address to which the HeNB as the switchover target is to be connected.

The term "HeNB identifier" implies an identifier for uniquely identifying each of all HeNBs connected to the mobile communication system 1.

The EPS bearer context 636 manages the context (setting information) of an EPS bearer set per UE. Fig. 17 illustrates one example of the EPS bearer context 636.

The EPS bearer context 636 manages the UE identifier (e.g., "UE1"), the connected APN (e.g., "Type 1 / LIPA connection"), HoA (e.g., "2001:100:200:300::5"), the LGW address (e.g., "2001:100:200:300::2), the HeNB address (e.g., "2001:100:200:300::1), S1-TEID (e.g., "TEID1"), a cell ID (e.g., "ECG1 (E-UTRAN Cell Global Identifier) 1", and an EPS bearer ID (e.g., "EPS bearer 1") in binding relation.

Here, S1-TEID is an ID of a logical path established between the HeNB 10 (or the HeNB 20) and the SGW 50. S1-TEID is assigned per EPS bearer.

The cell ID is an identifier for uniquely identifying a radio cell formed by each HeNB. In the case of HeNB, the cell ID and the HeNB identifier are the same.

### [1.3 Flow of Processing]

A flow of processing in this embodiment will be described below.

### [1.3.1 Handover Processing Procedure]

First, a handover processing procedure is described. Specifically, the description is started from a situation where a connected state is established (from the LGW 40 to Source HeNB) and communication is started between the HeNB 10 and the UE 30. In Fig. 15, Source HeNB is the HeNB 10 that has established the connected state, and Target HeNB (first Target HeNB or second Target HeNB) represents Target HeNB (first Target HeNB or second Target HeNB), to which the handover request is transmitted and with which the UE 30 newly establishes a connected state through the handover procedure when the UE 30 cannot maintain the connected state with Source HeNB.

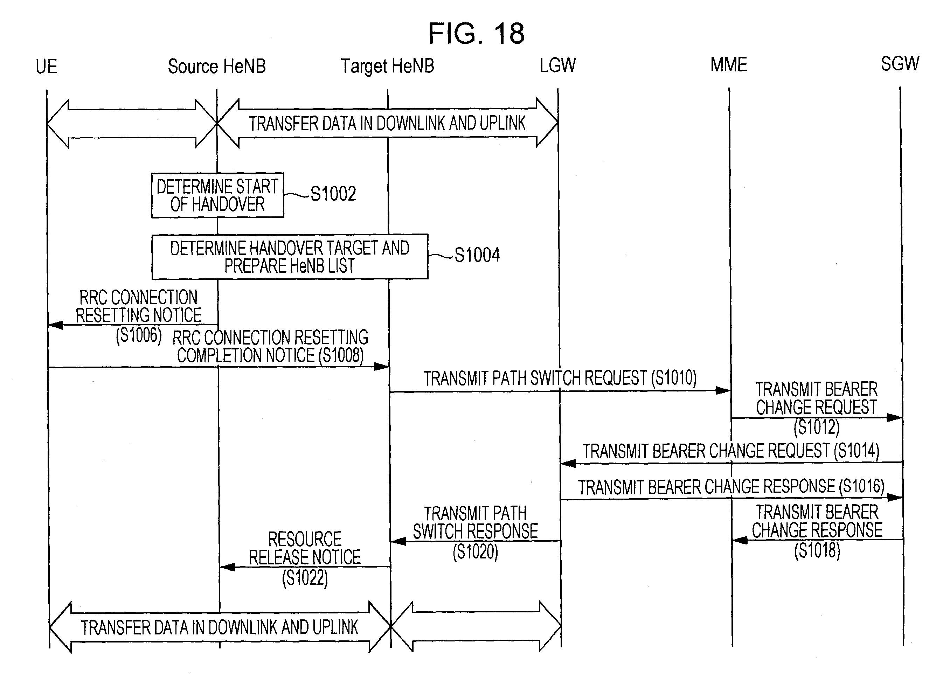

Fig. 18 is a sequence chart of the procedure for handover from Source HeNB to Target HeNB. In Fig. 18, first, Source HeNB determines start of the handover procedure by utilizing the neighborhood HeNB relationship table 134 (S1002). Then, a process of determining the handover target and preparing a HeNB list is executed (STEP S1004).

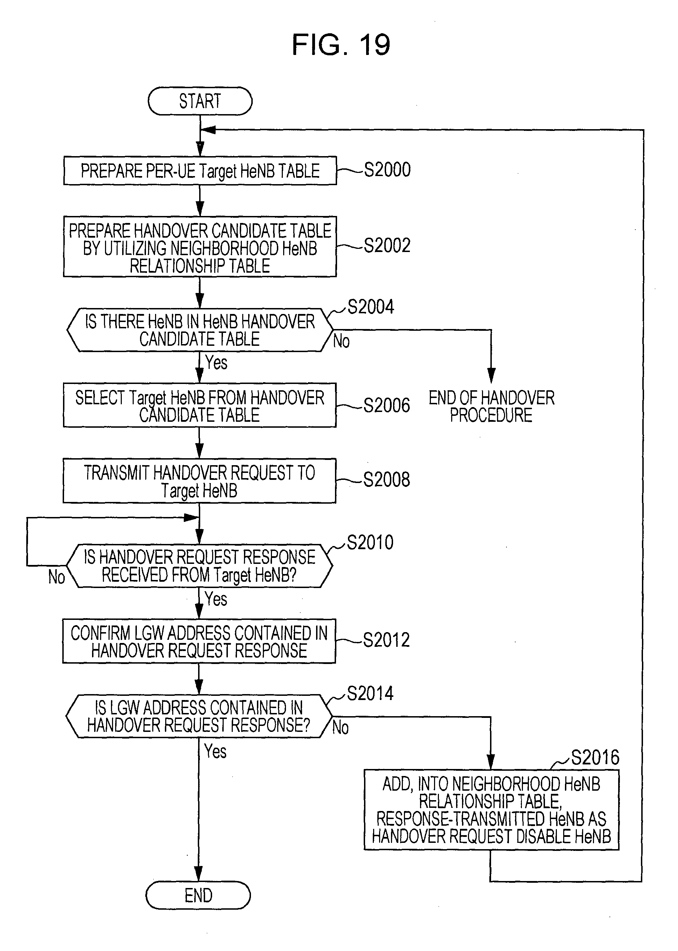

Here, Fig. 19 illustrates a procedure, which is executed by Source HeNB (i.e., the HeNB 10 in this embodiment) in STEP S1004, to determine the start of the handover procedure by utilizing the LIPA handover candidate table 136.

First, Source HeNB (HeNB 10) prepares the per-UE Target HeNB table 132 by utilizing the measurement report from the UE 30 (STEP S2000). In this respect, the UE 30 prepares the measurement report by measuring the reference signal transmitted from each of neighborhood HeNBs (including the HeNB 10, the HeNB 20 or the HeNB 25). For example, the measurement report regarding the HeNB 10 is prepared by measuring the reference signal transmitted from the HeNB 10.

Furthermore, the UE 30 prepares the measurement report regarding the HeNB 20 by measuring the reference signal transmitted from the HeNB 20 (first Target HeNB). Moreover, the UE 30 prepares the measurement report regarding the HeNB 25 (second Target HeNB) by measuring the reference signal transmitted from the HeNB 25. Here, the measurement report contains information indicating a received power value of the reference signal, for example.

Then, Source HeNB (HeNB 10) deletes HeNBs, which are present in the handover disable HeNB list contained in the neighborhood HeNB relationship table 134, from Target HeNB candidates obtained from the measurement report in STEP S2000, thereby preparing the handover candidate table 136 that lists LIPA handover enable candidates for the UE 30 (STEP S2002).

It is to be noted that the handover candidate table 136 may not be prepared when the following function can be realized, i.e., when Source HeNB has the function of selecting Target HeNB (e.g., HeNB having a maximum received power value) from the per-UE Target HeNB table 132, checking the neighborhood HeNB relationship table 132, and, if the selected Target HeNB is not adapted for the LIPA handover procedure, selecting another Target HeNB again from the per-UE Target HeNB 132.

If, as a result of preparing the list of Target HeNBs that are the LIPA handover enable candidates for the UE 30 (i.e., the handover candidate table 136), it is determined that there is no Target HeNB, Source HeNB ends the LIPA handover procedure (STEP S2004; No).

When the handover candidate table 136 is not prepared in STEP 2002, the handover procedure is ended if there remains no Target HeNB candidate as a result of excluding the HeNBs in the handover disable HeNB list, which is included in the neighborhood HeNB relationship table 134, from the per-UE Target HeNB 132.

On the other hand, if the handover candidate table 136 includes the HeNB as the candidate of Target HeNB (STEP S2400; Yes), Source HeNB selects the LIPA handover enable Target HeNB for the UE 30 (STEP S2006). Here, Target HeNB may be selected by various methods. For example, the HeNB having a maximum received power value in the measurement report, reported from the UE 30, can be selected from the list of LIPA handover enable Target HeNBs for the UE 30 (i.e., from the handover candidate table 136).

When the handover candidate table 136 is not prepared in STEP 2002, the HeNB having the maximum received power value in the measurement report, reported from the UE 30, is selected as Target HeNB based on the result of excluding the HeNBs in the handover disable HeNB list, which is included in the neighborhood HeNB relationship table 134, from the per-UE Target HeNB 132.

Then, Source HeNB transmits the handover request to Target HeNB selected in STEP S2006 (STEP S2008). Here, the handover request transmitted from Source HeNB contains, in the option area, information regarding at least the LGW address to which Source HeNB is connected, and the LIPA bearer, as illustrated in Fig. 6(a). The LIPA-adapted PDN connection may be contained in the option area.

Because Source HeNB sets the LGW address and the LIPA bearer to be contained in the option area of the handover request, the HeNB not adapted for the LIPA handover procedure can transmit the handover request response without taking care of the LGW address and the LIPA bearer. Also when the LIPA-adapted PDN connection is contained in the option area, Target HeNB operates without taking care of the LIPA-adapted PDN connection.

On the other hand, the HeNB adapted for the LIPA handover procedure can extract the information of the LGW address and the LIPA bearer (including the LIPA-adapted PDN connection when the LIPA-adapted PDN connection is contained in the option area of the handover request), and can reply the handover request response in the LIPA handover procedure.

By transmitting the above-mentioned handover request message from Source HeNB, Target HeNB can reply a response to the start of the ordinary handover procedure, whereas Source HeNB can confirm whether Target HeNB has the function adapted for the LIPA handover procedure.

Target HeNB having received the handover request from Source HeNB replies the handover request response, and Source HeNB receives the handover request response (STEP S2010).

Target HeNB not adapted for the LIPA handover procedure (e.g., the first Target HeNB (HeNB 20) in this embodiment) replies the handover request response without processing the information of the LGW address and the LIPA bearer, which is contained in the option area of the handover request (including the LIPA-adapted PDN connection when the LIPA-adapted PDN connection is contained in the option area of the handover request).

Here, because the option area of the handover request transmitted from Source HeNB contains information elements (i.e., the LGW address, the LIPA bearer, and the LIPA-adapted PDN connection) for the LIPA handover, Target HeNB not adapted for the LIPA handover procedure can execute processing of the ordinary handover procedure without taking care of the information elements of the LIPA handover, which are contained in the option area, and can transmit the handover request response to Source HeNB.

Thus, Target HeNB can notify Source HeNB of the fact that the Target HeNB is not adapted for the LIPA handover procedure.

On the other hand, when Target HeNB having received the handover request from Source HeNB is the HeNB adapted for the LIPA handover procedure (e.g., the second Target HeNB (HeNB 25) in this embodiment), the Target HeNB extracts the information of the LGW address and the LIPA bearer, which is contained in the option area of the handover request, and replies the handover request response. At that time, the handover request response includes the LGW address to which the Target HeNB is connected.

Here, because Source HeNB contains, in the option area of the handover request, the LGW address and the LIPA bearer (including the LIPA-adapted PDN connection in some cases), Target HeNB adapted for the LIPA handover procedure can extract the information of the LGW address and the LIPA bearer both contained in the option area, and can reply the handover request response in the LIPA handover procedure.

Thus, Target HeNB can notify Source HeNB of the fact that the Target HeNB is adapted for the LIPA handover procedure.

As described above, because Source HeNB transmits the information elements for the LIPA handover contained in the option area of the handover request message, Target HeNB can notify Source HeNB of the fact that the Target HeNB is not adapted for the LIPA handover procedure. Moreover, Target HeNB can notify Source HeNB of the fact that the Target HeNB is adapted for the LIPA handover procedure, by transmitting the handover request response in the LIPA handover procedure.

Stated another way, with the above-described transfer of the handover request and the handover request response between Source HeNB and Target HeNB, it is possible to not only reply the response for the start of the ordinary handover procedure, but also to confirm whether the Target HeNB has the function adapted for the LIPA handover procedure.

If Source HeNB receives the handover request response (STEP S2010; Yes), Source HeNB confirms the LGW address of Target HeNB, which is contained in the handover request response (STEP S2012).

If the LGW address is not contained in the handover request response (STEP S2014; No), the relevant Target HeNB is added as the handover disable HeNB into the neighborhood HeNB relationship table (STEP S2016).

On the other hand, if the LGW address is contained in the handover request response (STEP S2014; Yes), Source HeNB determines, as Target HeNB, the HeNB included the handover request, and ends the handover procedure.

In the above-described procedure, if it is determined in STEP S2014 that the LGW address is contained in the handover request response (STEP S2014; Yes), whether Source HeNB and Target HeNB are connected to the same LGW may be confirmed.

Whether Source HeNB and Target HeNB are connected to the same LGW can be confirmed by checking whether the LGW address of the LGW to which Source HeNB is connected and the LGW address of the LGW to which Target HeNB is connected are the same. When the LGW address of the LGW to which Source HeNB is connected and the LGW address of the LGW to which Target HeNB is connected are the same, it is determined that Source HeNB and Target HeNB are connected to the same LGW. Thus, the relevant Target HeNB may be determined to be adaptable for the LIPA handover procedure.

On the other hand, when Source HeNB and Target HeNB are connected to different LGWs, the relevant Target HeNB may be added as the handover disable HeNB into the neighborhood HeNB relationship table 134 (STEP S2016).

The above-mentioned HeNBs connected to different HeNBs may be managed in the neighborhood HeNB relationship table 134, or in another table.

After the process of S2016 has been executed, Source HeNB returns to the process of STEP S2000 and repeats the above-described processing. The processing is repeated until it is confirmed that the LGW address is contained in the handover request response from Target HeNB (or that Source HeNB and Target HeNB are connected to the same LGW address), or until there are not any more Target HeNB candidates.

Changes of the neighborhood HeNB relationship table 134 and the handover candidate table 136 in the above procedure will be described below. Here, the per-UE Target HeNB table 132 illustrated in Fig. 3 contains the HeNB 20 and the HeNB 25 based on the result of the measurement report from the UE 30. On that occasion, it is assumed that the result of the measurement report from the UE is not changed over time, and that the data managed in the per-UE Target HeNB table 132 is the same.

The handover candidate table 136 is not necessarily required to be prepared insofar as the Target HeNB candidate can be limited from the per-UE Target HeNB table 132 by utilizing the neighborhood HeNB relationship table 134. Stated another way, Source HeNB may have the function of selecting Target HeNB (e.g., HeNB having a maximum received power value) from the per-UE Target HeNB table 132, checking the neighborhood HeNB relationship table 132, and, if the selected Target HeNB is not adapted for the LIPA handover procedure, selecting another Target HeNB again from the per-UE Target HeNB table 132.

The neighborhood HeNB relationship table 134 in Fig. 4(a) illustrates an initial state of the neighborhood HeNB relationship table. The neighborhood HeNB relationship table 134 in Fig. 4(b) illustrates a state where the HeNB 25 is added in step S2016 as the handover request disable HeNB into the neighborhood HeNB relationship table 134, after the "No" determination has been made in STEP S2014 of Fig. 19 because the HeNB 20 is not the HeNB adapted for the LIPA handover procedure and the LGW address is not contained in the handover request response in STEP S2014.

It is also assumed that the handover candidate table 136 in Fig. 5(a) represents the handover candidate table 136 prepared in STEP S2002 in a first cycle, i.e., the handover candidate table 136 prepared when the neighborhood HeNB relationship table 134 is in the initial state of Fig. 4(a).

Here, because the per-UE Target HeNB table 132 in Fig. 3 contains the HeNB 20 and the HeNB 25 and the neighborhood HeNB relationship table in Fig. 4(a) contains nothing, the handover candidate table 136 in Fig. 5(a) contains the HeNB 20 and the HeNB 25.

The HeNB 20 is then selected as Target HeNB. However, because the HeNB 20 is not adapted for the LIPA handover procedure, the HeNB 20 is added to the handover disable HeNB list in the neighborhood HeNB relationship table 134 in STEP S2016.

With the preparation of the handover candidate table 136 in STEP S2002 in a second cycle, the handover candidate table 136 is prepared in the state where the HeNB 20 is contained in the handover disable HeNB list in the neighborhood HeNB relationship table 134 as illustrated in Fig. 4(b).

Here, because the per-UE Target HeNB table 132 in Fig. 3 contains the HeNB 20 and the HeNB 25 and the neighborhood HeNB relationship table 134 in Fig. 4(b) contains the HeNB 20 in the handover disable HeNB list, the handover candidate table 136 in Fig. 5(b) contains only the HeNB 25. The HeNB 25 is adapted for the LIPA handover procedure, whereby the HeNB 25 is selected as Target HeNB.

When Source HeNB does not prepare the handover candidate table 136, Source HeNB excludes, from the per-UE Target HeNB table 132, the HeNB 20 contained in the handover disable HeNB list in the neighborhood HeNB relationship table 134, and selects, as Target HeNB, the HeNB 25 that is the remained Target HeNB candidate. Because the HeNB 25 is the HeNB adapted for the LIPA handover procedure, the procedure illustrated in Fig. 19 can be brought to an end.

Returning to Fig. 18, Source HeNB transmits an RRC connection resetting notice to the UE 30 (S1006). The RRC connection resetting notice includes an identifier indicating the second Target HeNB.

Then, the UE 30 executes RRC connection resetting in accordance with information of the second Target HeNB, which is included in the RRC connection reconfiguration notice. After confirming the completion of the setting with respect to the second Target HeNB, the UE 30 transmits an RRC connection resetting completion notice to the second Target HeNB (S1008).

Upon receiving the RRC connection resetting completion notice, the second Target HeNB transmits a path switch request to the MME 60 (S1010). The path switch request contains the information of UE for which HeNB is switched over, the APN, the information of Source HeNB that is the path switch source, the information of the second Target HeNB that is the path switch target, and the information of the LIPA bearer and the LGW address to which Target HeNB is connected. The path switch request may further contain the LIPA-adapted PDN connection.

Upon receiving the path switch request from the second Target HeNB, the MME 60 changes the HeNB address in the EPS bearer context 636 corresponding to both the information of UE and the information of the LIPA bearer, which are contained in the path switch request, from the address of Source HeNB to the address of the second Target HeNB. Then, the MME 60 transmits a bearer change request to the SGW 50 (S1012). Here, the EPS bearer context may be changed in association with the LIPA-adapted PDN connection.

The MME 60 sets, in the bearer change request, the information (LIPA bearer) of UE for which HeNB is switched over, the APN, the LGW address to which Source HeNB is connected, the information of Source HeNB that is the bearer change source, and the information of the second Target HeNB that is the bearer change target. Here, the bearer change request may further contain the information of the LIPA-adapted PDN connection.

Upon receiving the bearer change request, the SGW 50 transmits the bearer change request to the LGW 40 (S1014). The SGW 50 sets, in the bearer change request, the information of UE for which HeNB is switched over, the APN, the LGW address to which Source HeNB is connected, the information of Source HeNB that is the bearer change source, and the information of the second Target HeNB that is the bearer change target. Here, the bearer change request may further contain the information of the LIPA-adapted PDN connection.

Upon receiving the bearer change request from the SGW 50, the LGW 40 changes the data target for the UE 30 from Source HeNB to the second Target HeNB, and further changes the LIPA bearer necessary for data transmission and reception at the same time. After changing the data target and the bearer, the LGW 40 transmits a bearer change response to the SGW 50 (S1016).

Upon receiving the bearer change response from the LGW 40, the SGW 40 confirms completion of the change of the path and the change of the LIPA bearer to the HeNB 20 from the LGW 40, and transmits the bearer change response to the MME 60 (S1018).

On the other hand, the LGW 40 transmits a path switch response, which indicates completion of the path switch, to the second Target HeNB (S1020). Upon receiving the path switch response from the LGW 40, the second Target HeNB confirms the change of the path from Source HeNB to the second Target HeNB, and transmits a resource release notice to Source HeNB (S1022).

Through the proceedings described above, even when UE is moved and HeNB is required to be switched over during the data transmission and reception from the LGW 50 to Source HeNB, the handover procedure of selecting proper Target HeNB and switching over the data transmission and reception can be completed.

Through the proceedings described above, by transmitting the handover request that contains the information elements indicating the relevant handover procedure being the LIPA handover procedure, Source HeNB can detect whether Target HeNB is adapted for the LIPA handover procedure, can form the neighborhood HeNB relationship table, and can suppress transmission of the unnecessary handover request by utilizing the neighborhood HeNB relationship table.

Thus, by transmitting the handover request that contains, in its option area, new information elements indicating the relevant handover procedure being the LIPA handover procedure, Source HeNB can detect whether Target HeNB is the HeNB adapted for the LIPA handover procedure.

Furthermore, by receiving the handover request from Source HeNB and transmitting the ordinary handover request response, Target HeNB can notify that the relevant Target HeNB is not adapted for the LIPA handover procedure.

Moreover, by receiving the ordinary handover request response from Target HeNB, Source HeNB can detect that the relevant Target HeNB is not adapted for the LIPA handover procedure.

In addition, by detecting that Target HeNB is the HeNB not adapted for the LIPA handover procedure, Source HeNB can group the relevant Target HeNB, as the HeNB not adapted for the LIPA handover procedure, in the neighborhood HeNB relationship table.

By receiving the handover request from Source HeNB and transmitting the handover request response in the LIPA handover procedure, Target HeNB can indicate that the relevant Target HeNB is adapted for the LIPA handover procedure.

By receiving the handover request response in the LIPA handover procedure from Target HeNB, Source HeNB can detect that the relevant Target HeNB is adapted for the LIPA handover procedure.

By detecting that Target HeNB is the HeNB adapted for the LIPA handover procedure, Source HeNB can group the relevant Target HeNB, as the HeNB adapted for the LIPA handover procedure, in the neighborhood HeNB relationship table.

By utilizing the neighborhood HeNB relationship table in which the HeNB not adapted for the LIPA handover procedure and the HeNB adapted for the LIPA handover procedure are grouped separately, Source HeNB can suppress transmission of the handover request to the HeNB not adapted for the LIPA handover procedure, and hence can efficiently start the LIPA handover procedure.

### (Modification)

The home network 90 may be a broadband access network capable of accessing, e.g., the Internet.

The LGW 40 in the mobile communication system 1 is an access control device that is not only connected to a domestic network, such as a home network, but also is able to transfer data, transmitted from and received by the UE 30, with respect to the broadband access network.

Here, the data transmission and reception between the UE 30 and the broadband access network is called SIPTO (Selected IP Traffic Offload) for the reason that data is transmitted and received in a wired network while bypassing a route to the core network 80. Furthermore, the UE 30 utilizes an SIPTO-adapted PDN connection to establish a connection to the broadband access network from HeNB. Moreover, the UE 30 performs data transmission and reception with respect to a communication device in the broadband access network via the LGW 40. In the case of performing the data transmission and reception with respect to the communication device in the broadband access network, the UE 30 is required to set an SIPTO bearer with respect to the LGW 40.

In the above-described case, there is possibility that HeNB adapted for an SIPTO handover procedure and HeNB not adapted for the SIPTO handover procedure exist concurrently. Stated in another way, there is possibility that when the HeNB adapted for the SIPTO handover procedure is added in a state where the HeNB not adapted for the SIPTO handover procedure is installed, the function of executing the SIPTO handover procedure is not added by update, for example, to the HeNB that is not adapted for the SIPTO handover procedure. Namely, there is possibility that, because HeNB is operated in a home, the use of HeNB may be continued without being updated online. Thus, proceedings according to this embodiment is effective in a situation where the HeNB adapted for the SIPTO handover procedure and the HeNB not adapted for the SIPTO handover procedure are present concurrently.

By applying the LIPA handover procedure, the SIPTO handover procedure can also be executed in a similar manner.

In more detail, when the home network 90 in the mobile communication system 1 is replaced with the broadband access network, Source HeNB can detect whether Target HeNB is adapted for the SIPTO handover procedure, by setting the LGW address and the SIPTO bearer in the option area of the handover request. Furthermore, Source HeNB can form the neighborhood HeNB relationship table, and can suppress transmission of the unnecessary handover request by utilizing the neighborhood HeNB relationship table. Here, the handover request may further contain the SIPTO-adapted PDN connection in the option area.

Thus, by transmitting the handover request that contains, in the option area, new information elements (i.e., the LGW address and the SIPTO bearer (and the SIPTO-adapted PDN connection in some cases)) indicating the relevant handover procedure being the SIPTO handover procedure, Source HeNB can detect whether Target HeNB is the HeNB adapted for the SIPTO handover procedure.

Furthermore, by receiving the handover request from Source HeNB and transmitting the ordinary handover request response, Target HeNB can notify that the relevant Target HeNB is not adapted for the SIPTO handover procedure.

Moreover, by receiving the ordinary handover request response from Target HeNB, Source HeNB can detect that the relevant Target HeNB is not adapted for the SIPTO handover procedure.

In addition, by detecting that Target HeNB is the HeNB not adapted for the SIPTO handover procedure, Source HeNB can group the relevant Target HeNB, as the HeNB not adapted for the SIPTO handover procedure, in the neighborhood HeNB relationship table.

By receiving the handover request from Source HeNB and transmitting the handover request response in the SIPTO handover procedure, Target HeNB can indicate that the relevant Target HeNB is adapted for the SIPTO handover procedure.

By receiving the handover request response in the SIPTO handover procedure from Target HeNB, Source HeNB can detect that the relevant Target HeNB is adapted for the SIIPTO handover procedure.

By detecting that Target HeNB is the HeNB adapted for the SIPTO handover procedure, Source HeNB can group the relevant Target HeNB, as the HeNB adapted for the SIPTO handover procedure, in the neighborhood HeNB relationship table.

By utilizing the neighborhood HeNB relationship table in which the HeNB not adapted for the SIPTO handover procedure and the HeNB adapted for the SIPTO handover procedure are grouped separately, Source HeNB can suppress transmission of the handover request to the HeNB not adapted for the SIPTO handover procedure, and hence can efficiently start the SIPTO handover procedure.

### [2. Second Embodiment]

A second embodiment will be described below. Because a mobile communication system according to the second embodiment can be constituted in the same configuration as that described in the first embodiment, description of the mobile communication system is omitted. It is, however, to be noted that the X2 interface forming a logical path between HeNBs is not present in the second embodiment, and that control information cannot be transferred directly between HeNBs.

In the second embodiment, processing is started by Source HeNB (HeNB 10) transmitting the handover request to the MME 60.

While the handover procedure can be started in the first embodiment by transferring the control information between HeNBs, the second embodiment is described in connection with a handover procedure that can be employed when the control information cannot be transferred between HeNBs.

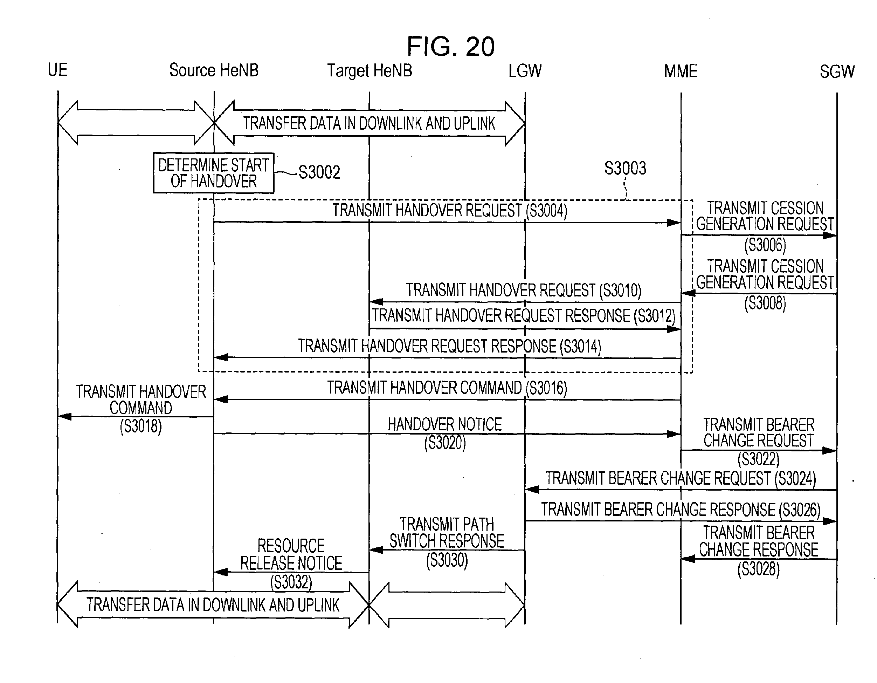

Processing in such a handover procedure will be described below with reference to Fig. 20.

First, Source HeNB determines start of the LIPA handover procedure by utilizing the measurement report that is periodically transmitted from the UE 30 (S3002). The measurement report can be utilized in a similar manner to that described in the first embodiment. For example, the information regarding the value of the received power, contained in the measurement report, can be utilized.

Then, Source HeNB executes a process of determining the handover target and preparing a HeNB list (S3003). Here, S3003 corresponds to the process of determining the handover target and preparing the neighborhood HeNB relationship table through processing from S3004 to S3014 surrounded by dotted lines.

Stated in another way, regarding proceedings through which Source HeNB determines the handover target by utilizing the neighborhood HeNB relationship table, the proceedings described in the first embodiment with reference to Fig. 19 can be similarly employed between Source HeNB and Target HeNB.

However, because the control information cannot be transferred directly between Source HeNB and Target HeNB in the second embodiment, the control information is transferred via the MME 60 (as represented by the processing from S3004 to S3014 in Fig. 20).

The proceedings of transfer of the handover request and the handover request response between Source HeNB and Target HeNB via the MME 60 are as follows. First, Source HeNB transmits the handover request to the MME 60 (S3004). Here, the handover request transmitted from Source HeNB contains, in its option area, the information of the LGW address to which Source HeNB is connected and the LIPA bearer, and the information of Target HeNB, as represented in the handover request message of Fig. 6(b). The handover request transmitted from Source HeNB may further contain, in the option area, the LIPA-adapted PDN connection.

As in the first embodiment, when it is determined from the neighborhood HeNB relationship table 134, illustrated in Fig. 4, that Target HeNB is not adapted for the LIPA handover procedure, Source HeNB stops the transmission of the handover request and searches for the HeNB adapted for the LIPA handover procedure.

Upon receiving the handover request from Source HeNB, the MME 60 transmits a cession generation request including the information of the UE 30 and the information of the LIPA bearer, which are contained in the handover request, to the SGW 50 (S3006).

The MME 60 sets, in the cession generation request, the information of UE for which HeNB is switched over, the information of Source HeNB that is the bearer change source, and the information of Target HeNB that is the bearer change target.

Upon receiving the cession generation request from the LGW 40, the SGW 50 confirms completion of the change of the path and the change of the bearer to the HeNB 20 from the LGW 40, and transmits the cession generation request to the MME 60 (S3008).

Upon receiving the cession generation request from the SGW 40, the MME 60 transmits the handover request to Target HeNB that has been notified in 3004 (S3010). The handover request transmitted from the MME 60 contains, in its option area, the information of the LGW address to which Source HeNB is connected and the LIPA bearer, as represented in the handover request message of Fig. 6(a). Here, the handover request may further contain, in the option area, the LIPA-adapted PDN connection.

When Target HeNB having received the handover request from the MME 60 is the HeNB (e.g., the HeNB 20) not adapted for the LIPA handover procedure, the relevant Target HeNB ignores the information of the LGW address and the LIPA bearer contained in the option area of the handover request, and replies a handover request response.

When Target HeNB having received the handover request from the MME 60 is the HeNB (e.g., the HeNB 25) adapted for the LIPA handover procedure, the relevant Target HeNB extracts the information of the LGW address and the LIPA bearer contained in the option area of the handover request, and replies a handover request response (S3012). At that time, the handover request response contains the LGW address to which Target HeNB is connected, as illustrated in Fig. 9.

Here, the reply transmitted from the Target HeNB adapted for the LIPA handover procedure in response to the handover request is not limited to the handover request response, and it may be, for example, a signal indicating that the relevant Target HeNB is adapted for the LIPA handover procedure.

Upon receiving the handover request response containing the same LGW address as that of Source HeNB, the MME 60 transmits the handover request response to Source HeNB (S3014). The handover request response transmitted here is the same as that transmitted from Target HeNB to the MME 60. More specifically, in the case of Target HeNB being not adapted for the LIPA handover procedure, the handover request response is transmitted without setting the LGW address in the handover request response. In the case of Target HeNB being adapted for the LIPA handover procedure, the handover request response is transmitted with the LGW address contained in the handover request response.

In the above-described S3004 to S3014, the handover request and the handover request response can be transmitted between Source HeNB and Target HeNB by transferring the handover request and the handover request response to Source HeNB and Target HeNB (e.g., the HeNB 20 or the HeNB 25) via the MME 60. In other words, the process of determining the handover target and preparing the handover candidate table, illustrated in Fig. 19, can be executed between Source HeNB and Target HeNB.

Then, the MME 60 transmits a handover command to Source HeNB (S3016). Here, the handover command may be transmitted instead of the handover request response that has been transmitted in S3016. Stated in another way, the handover command may contain the information elements of the handover request response and the LGW address to which Target HeNB is connected.

Upon receiving the handover command, Source HeNB transmits the handover command to the UE 30 (S3018). Upon receiving the handover command, the UE 30 cuts off the connection to Source HeNB, whereas it establishes the connection to Target HeNB.

On the other hand, Source HeNB confirms that the connection to the UE 30 has been cut off, and transmits a handover notice to the MME 60 (S3020). Here, the handover notice contains information to identify UE.

Upon receiving the handover notice from Source HeNB, the MME 60 changes the information of UE, contained in the handover notice, and the HeNB address of the EPS bearer context 636 adapted for LIPA from the address of Source HeNB to the address of Target HeNB. Then, the MME 60 transmits a bearer change request to the SGW 50 (S3022). The MME 60 sets, in the bearer change request, the information of UE for which HeNB is switched over (i.e., the information of the LIPA bearer), the APN (LIPA), the information of Source HeNB that is the bearer change source, and the information of Target HeNB that is the bearer change target. Here, the MME 60 may set the LIPA-adapted PDN connection in the cession generation request.

Upon receiving the bearer change request, the SGW 50 transmits the bearer change request to the LGW 40 (S3024). The SGW 50 sets, in the bearer change request, the information (LIPA bearer) of UE for which HeNB is switched over, the APN, the information of Source HeNB that is the bearer change source, and the information of Target HeNB that is the bearer change target. Here, the MME 60 may set the LIPA-adapted PDN connection in the cession generation request.

Upon receiving the bearer change request from the SGW 50, the LGW 40 changes the data target of the UE 30 from Source HeNB to Target HeNB and further changes the bearer necessary for the data transmission and reception at the same time. After changing the data target and the bearer, the LGW 40 transmits a bearer change response to the SGW 50 (S3026).

Upon receiving the bearer change response from the LGW 40, the SGW 40 confirms completion of the change of the path and the change of the bearer to the HeNB 20 from the LGW 40, and transmits the bearer change response to the MME 60 (S3028).

On the other hand, the LGW 40 confirms completion of the change of the path and the bearer from Source HeNB to Target HeNB, and transmits a path switch response to Target HeNB (S3030).

Upon receiving the path switch response, Target HeNB confirms that a communication path with the LGW is established, and transmits a resource release notice to Source HeNB (S3032). Source HeNB receives the resource release notice from Target HeNB and recognizes that the LIPA handover procedure has been completed.

Through the proceedings described above, even under a situation that the control information cannot be transferred between HeNBs and that, with movement of UE, HeNB is required to be switched over during the data transmission and reception between the LGW 50 and Source HeNB, the handover procedure of selecting proper Target HeNB and switching over the data transmission and reception can be completed.

Through the proceedings described above, by transmitting the handover request that contains the information elements indicating the relevant handover procedure being the LIPA handover procedure, Source HeNB can detect whether Target HeNB is adapted for the LIPA handover procedure, can form the neighborhood HeNB relationship table, and can suppress transmission of the unnecessary handover request by utilizing the neighborhood HeNB relationship table.

Thus, by transmitting the handover request that contains, in its option area, new information elements indicating the relevant handover procedure being the LIPA handover procedure, Source HeNB can detect whether Target HeNB is the HeNB adapted for the LIPA handover procedure.

Furthermore, by receiving the handover request from Source HeNB and transmitting the ordinary handover request response, Target HeNB can notify that the relevant Target HeNB is not adapted for the LIPA handover procedure.

Moreover, by receiving the ordinary handover request response from Target HeNB, Source HeNB can detect that the relevant Target HeNB is the HeNB not adapted for the LIPA handover procedure.

In addition, by detecting that Target HeNB is the HeNB not adapted for the LIPA handover procedure, Source HeNB can group the relevant Target HeNB, as the HeNB not adapted for the LIPA handover procedure, in the neighborhood HeNB relationship table.

By receiving the handover request from Source HeNB and transmitting the handover request response in the LIPA handover procedure, Target HeNB can indicate that the relevant Target HeNB is adapted for the LIPA handover procedure.

By receiving the handover request response in the LIPA handover procedure from Target HeNB, Source HeNB can detect that the relevant Target HeNB is the HeNB adapted for the LIPA handover procedure.

By detecting that Target HeNB is the HeNB adapted for the LIPA handover procedure, Source HeNB can group the relevant Target HeNB, as the HeNB adapted for the LIPA handover procedure, in the neighborhood HeNB relationship table.

By utilizing the neighborhood HeNB relationship table in which the HeNB not adapted for the LIPA handover procedure and the HeNB adapted for the LIPA handover procedure are grouped separately, Source HeNB can suppress transmission of the handover request to the HeNB not adapted for the LIPA handover procedure, and hence can efficiently start the LIPA handover procedure.

### [3. Modifications]

While the embodiments of the present invention have been described above with reference to the drawings, practical forms of the present invention are not limited to the foregoing embodiments, and the present invention involves various design changes, etc. within the scope of claims without departing from the gist of the present invention.

Programs operating in the devices in each of the above-described embodiments are programs for controlling a CPU and so on (i.e., programs causing a computer to operate) in a manner of realizing the functions of the above-described embodiments. Information handled in those devices is temporarily accumulated in a temporary storage device (e.g., a RAM) during processing, and then stored in any of various types of storage devices, e.g., a ROM and a HDD. Furthermore, that information is read out, corrected, and written by the CPU as required.

A recording medium storing the programs may be any of semiconductor media (such as a ROM and a nonvolatile memory card), optical recording media and magneto-optical recording media (such as a DVD (Digital Versatile Disc), an MO (Magneto Optical Disc), an MD (Mini Disc), a CD (Compact Disc), and a BD), and magnetic recording media (such as a magnetic tape and a flexible disc). While the functions of the above-described embodiments are realized by executing the loaded programs, the functions of the present invention can also be realized in some cases by executing processing in cooperation with an operating system, other application programs and so on according to instructions from the programs.

When the programs are distributed in the markets, the programs can be distributed in a state stored in a portable recording medium, or may be transferred to a server computer connected via a network, e.g., the Internet. In such a case, it is a matter of course that a storage device in the server computer is also involved in the present invention.

The devices in the above-described embodiments may be each partly or entirely realized with the use of an LSI, typically an integrated circuit. Individual functional blocks of each device may be separately integrated into chips, or may be partly or entirely integrated into chips. A method of forming the integrated circuit is not limited to the LSI, and it may be practiced using a dedicated circuit or a universal processor. Furthermore, if a technique of realizing the integrated circuit instead of LSI will be developed with the progress of the semiconductor technology, it is also of course possible to use an integrated circuit obtained with the newly developed technique.

### DESCRIPTION OF REFERENCE NUMERALS

- 1:: mobile communication system
- 3:: local home network
- 90:: home network
- 10:: HeNB
- 100:: control unit
- 110:: transmission and reception unit
- 120:: LTE radio communication unit
- 125:: antenna
- 130:: storage unit
- 132:: per-UE Target HeNB table
- 134:: neighborhood HeNB relationship table
- 136:: handover candidate table
- 140:: handover request generation unit
- 150:: X2 interface unit
- 20:: HeNB
- 200:: control unit
- 210:: transmission and reception unit
- 220:: LTE radio communication unit
- 225:: antenna
- 230:: storage unit
- 240:: handover request response generation
- 25:: HeNB
- 30:: UE
- 40:: LGW
- 50:: SGW
- 60:: MME

## Claims

1. A home base station device included in a mobile communication system in which a local home network is connected to an external network via a gateway device, the local home network being connected to a mobile terminal device and a plurality of home base station devices including a home base station device to which the mobile terminal device is connected, the home base station device comprising:
a management table configured to manage whether other home base station devices are adaptable for LIPA handover;
determination means configured to, in a case of handover being performed for the mobile terminal device to some other home base station device, determine one home base station device adaptable for the LIPA handover, as a handover target, from the management table;
handover request transmission means configured to transmit a handover request, which contains at least an address of a connected gateway device in an option area thereof, to the other one home base station device;
handover reception means configured to receive a handover request response from the other one home base station device; and
update means configured to update the management table such that when the address of the gateway device is contained in the handover request, the LIPA handover is enable, and when the address of the gateway device is not contained in the handover request, the LIPA handover is disable.

2. The home base station device according to Claim 1, wherein in a case of the handover request containing the address of the gateway device, when the address of the gateway device to which is connected the home base station connected to the mobile terminal device is different from the address of the gateway device, which is contained in the handover request, the update means updates the management table such that the LIPA handover is disable.

3. A home base station device included in a mobile communication system in which a local home network is connected to an external network via a gateway device, the local home network being connected to a mobile terminal device and a plurality of home base station devices including a home base station device to which the mobile terminal device is connected, the home base station device comprising:
handover request reception means configured to receive a handover request from the home base station device connected to the mobile terminal device; and
handover request response transmission means configured to, when an address of the gateway device is contained in an option area of the handover request and LIPA handover is acceptable, transmit a handover request response containing an address of a connected gateway device.

4. A mobile communication system in which a local home network is connected to an external network via a gateway device, the local home network being connected to a mobile terminal device and a plurality of home base station devices including a home base station device to which the mobile terminal device is connected, the home base station device comprising:
a management table configured to manage whether other home base station devices are adaptable for LIPA handover;
determination means configured to, in a case of handover being performed for the mobile terminal device to some other home base station device, determine one home base station device adaptable for the LIPA handover, as a handover target, from the management table;
handover request transmission means configured to transmit a handover request, which contains at least an address of a connected gateway device in an option area thereof, to the other one home base station device;
handover reception means configured to receive a handover request response from the other one home base station device; and
update means configured to update the management table such that when the address of the gateway device is contained in the handover request, the LIPA handover is enable, and when the address of the gateway device is not contained in the handover request, the LIPA handover is disable.

5. A mobile terminal device connected to the mobile communication system according to Claim 4.

6. A position management device connected to a mobile communication system in which a local home network is connected to an external network via a gateway device, the local home network being connected to a mobile terminal device and a plurality of home base station devices including a home base station device to which the mobile terminal device is connected, the home base station device comprising:
handover request reception means configured to receive a handover request from the home base station device connected to the mobile terminal device;
confirmation means configured to, when an address of the gateway device is contained in an option area of the handover request, confirm whether the home base station device contained in the handover request is able to accept LIPA handover; and
handover request response transmission means configured to, when the home base station device contained in the handover request is able to accept the LIPA handover, transmit a handover request response containing an address of a gateway device to which the relevant home base station device is connected.
